# EUROPÄISCHE PATENTSCHRIFT

(11) **EP 3 848 832 B1**
(45) Veröffentlichungstag und Bekanntmachung des Hinweises auf die Patenterteilung: **08.05.2024**
(21) Anmeldenummer: 20150724.1
(22) Anmeldetag: 08.01.2020
(51) Int. Cl.: G06F 21/55, G06F 21/31, H04W 4/42, G08G 5/00

(54) **FLUGVERKEHRSKONTROLLSYSTEM SOWIE VERFAHREN ZUR ÜBERWACHUNG EINES FLUGVERKEHRSKONTROLLNETZWERKS**
FLIGHT TRAFFIC CONTROL SYSTEM AND METHOD FOR MONITORING A FLIGHT TRAFFIC CONTROL NETWORK
SYSTÈME AINSI QUE PROCÉDÉ DE COMMANDE DE LA CIRCULATION AÉRIENNE DESTINÉS À LA SURVEILLANCE D'UN RÉSEAU DE COMMANDE DE LA CIRCULATION AÉRIENNE

(43) Veröffentlichungstag der Anmeldung: 14.07.2021
(73) Patentinhaber: Rohde & Schwarz GmbH & Co. KG, 81671 München (DE)
(72) Erfinder: Kilpert, Joerg, 81671 München (DE); Muenstermann, Marius, 81671 München (DE)
(74) Vertreter: Novagraaf Group

(56) Entgegenhaltungen:
- EP-A1- 3 232 639
- WO-A1-98/22922
- DARILION K ET AL: "A service environment for air traffic control based on SIP", SYSTEM SCIENCES, 2004. PROCEEDINGS OF THE 37TH ANNUAL HAWAII INTERNATI ONAL CONFERENCE ON 5-8 JAN. 2004, PISCATAWAY, NJ, USA,IEEE, 5. Januar 2004 (2004-01-05), Seiten 205-214, XP010683069, DOI: 10.1109/HICSS.2004.1265482 ISBN: 978-0-7695-2056-8

## Beschreibung

Die Erfindung betrifft ein Flugverkehrskontrollsystem zur Flugsicherung, insbesondere des zivilen Luftverkehrs. Ferner betrifft die Erfindung ein Verfahren zur Überwachung eines Flugverkehrskontrollnetzwerks eines Flugverkehrskontrollsystems zur Flugsicherung.

Aus dem Stand der Technik sind Flugverkehrskontrollsysteme ("Air Traffic Control" - ATC) bekannt, um Flugzeuge am Boden sowie in der Luft zu leiten. Die Flugverkehrskontrollsysteme bzw. die Flugverkehrskontrolle bezeichnet dabei einen bodenbasierten Dienst von Fluglotsen, die an einem Lotsenarbeitsplatz den Flugverkehr leiten.

Bisher erfolgte die Sprachkommunikation zwischen dem Piloten eines Flugzeugs und dem Fluglotsen über den sogenannten Flugfunk, der üblicherweise im Frequenzbereich von 117,975 bis 137 MHz liegt. Zusätzlich zum Flugfunk ist es zudem bereits bekannt, dass Radar- und/oder Flugplandaten über Datennetze ausgetauscht werden, insbesondere Internet-Protokoll-Netzwerke (IP-Netzwerke), also Datennetze, die mit dem IP-Protokoll arbeiten.

Es besteht daher eine Datenverbindung zwischen dem Lotsenarbeitsplatz und dem Flugzeug, weswegen es auch in der Zwischenzeit Bestrebungen gibt, die Sprachkommunikation ebenfalls über das Datennetz bzw. IP-Netzwerk durchzuführen, was allgemein als Stimmübertragung über das Internetprotokoll ("Voice over Internet Protocol" - VolP) bezeichnet wird. Auch sind natürlich weitere Kommunikationswege über ein bestehendes Datennetz bzw. IP-Netzwerk möglich, beispielsweise Videokommunikation ("Video over IP").

Unabhängig davon sind die bei der Flugsicherung verwendeten Datennetze bzw. IP-Netzwerke, die Teil eines Flugverkehrskontrollnetzwerks ("ATC IP"-Netzwerke) sind, geschlossene Netzwerke, die einen limitierten Zugang nach außen bzw. von außen haben. Insofern wird innerhalb des entsprechenden Netzwerks wenn überhaupt nur auf Protokollebene analysiert, welche Kommunikation bzw. welcher Datenaustausch innerhalb des Flugverkehrskontrollnetzwerks stattfindet.

Hierdurch ist es jedoch nicht möglich, dass unerwünschter Datenverkehr innerhalb des Flugverkehrskontrollnetzwerks zuverlässig erkannt wird.

Aus dem Paper "A service environment for air traffic control based on SIP" von Darilion K et al ist ein Flugverkehrskontrollsystem bekannt, das eine IP-basierte Kommunikation hat, wobei entsprechende Dienste über das IP-Netzwerk erfolgen, die gesteuert werden.

In der EP 3 232 639 A1 ist ein gattungsgemäßes Flugverkehrskontrollsystem zur Flugsicherung beschrieben.

Aus der WO 98/22922 A1 ist ein System zur Koordination der Tätigkeit eines Fluglotsen bekannt, bei dem mehrere Dienste zentral zusammenlaufen, die für die Kontrolle der im Luftraum und am Boden befindlichen Flugzeuge notwendig sind.

Die Aufgabe der Erfindung ist es, die Sicherheit eines Flugverkehrskontrollnetzwerks eines Flugverkehrskontrollsystems zur Flugsicherung zu erhöhen.

Die Aufgabe wird erfindungsgemäß gelöst durch ein Flugverkehrskontrollsystem zur Flugsicherung, mit wenigstens einem Lotsenarbeitsplatz, wenigstens einem Funkgerät, einem Flugverkehrskontrollnetzwerk, das als ein Internet-Protokoll-Flugverkehrskontrollnetzwerk ausgebildet ist, und einem Netzwerküberwachungssystem, das dem Flugverkehrskontrollnetzwerk zugeordnet ist. Das Flugverkehrskontrollnetzwerk umfasst ein lokales Netzwerk, das mit einem Weitverkehrsnetzwerk verbunden ist. Der Lotsenarbeitsplatz ist in dem lokalen Netzwerk eingebunden und mit dem Funkgerät verbunden, das in dem lokalen Netzwerk und/oder in einem externen Netzwerk eingebunden ist. Das Netzwerküberwachungssystem weist eine Überwachungseinheit auf, die in dem lokalen Netzwerk eingebunden ist. Die Überwachungseinheit weist wenigstens ein Sensormodul auf, das eingerichtet ist, ausgetauschte Daten innerhalb des Flugverkehrskontrollnetzwerks nach Art des Inhalts der ausgetauschten Daten, verwendetem Protokoll der ausgetauschten Daten, Quelle ausgetauschten Daten, Senke ausgetauschten Daten und/oder Metadaten der ausgetauschten Daten zu analysieren. Das Sensormodul ist eingerichtet, die ausgetauschten Daten in Metadaten umzusetzen. Die Überwachungseinheit weist wenigstens ein Auswertungsmodul auf, das mit dem Sensormodul signalübertragend verbunden ist. Das Auswertungsmodul ist eingerichtet, die vom Sensormodul erzeugten Metadaten zu erhalten und auszuwerten.

Ferner wird die Aufgabe erfindungsgemäß gelöst durch ein Verfahren zur Überwachung eines Flugverkehrskontrollnetzwerks eines Flugverkehrskontrollsystems zur Flugsicherung, wobei das Flugverkehrskontrollnetzwerk als ein Internet-Protokoll-Flugverkehrskontrollnetzwerk ausgebildet ist und ein lokales Netzwerk umfasst, das mit einem Weitverkehrsnetzwerk verbunden ist. Es ist wenigstens ein Lotsenarbeitsplatz in dem lokalen Netzwerk eingebunden und mit einem Funkgerät verbunden, das in dem lokalen Netzwerk und/oder in einem externen Netzwerk eingebunden ist. Das Verfahren umfasst zudem die folgenden Schritte:
- Extrahieren von ausgetauschten Daten innerhalb des Flugverkehrskontrollnetzwerks mittels einer Überwachungseinheit eines Netzwerküberwachungssystems, wobei die Überwachungseinheit in dem lokalen Netzwerk eingebunden ist, und
- Überwachen der ausgetauschten Daten mittels der Überwachungseinheit.

Die ausgetauschten Daten werden innerhalb des Flugverkehrskontrollnetzwerks nach Art des Inhalts, verwendetem Protokoll, Quelle, Senke und/oder Metadaten der ausgetauschten Daten analysiert. Die ausgetauschten Daten werden in Metadaten umgesetzt, die ausgewertet werden.

Der Grundgedanke der Erfindung ist es, dass das Netzwerküberwachungssystem eine Überwachungseinheit aufweist, die in dem lokalen Netzwerk eingebunden ist, das Teil des Flugverkehrskontrollnetzwerks ist, welches zu überwachen ist, um unerwünschten Datenverkehr innerhalb des Flugverkehrskontrollnetzwerks feststellen zu können. Hierdurch lässt sich kontinuierlich prüfen, ob ein unerwünschter Datenverkehr vorliegt, insbesondere ein unerwünschter Datenverkehr von außen bzw. nach außen.

Bei dem lokalen Netzwerk handelt es sich um ein sogenanntes "Local Area Network" (LAN).

Bei dem Weitverkehrsnetzwerk handelt es sich um ein sogenanntes "Wide Area Network" (WAN), das sich im Unterschied zu einem LAN über einen großen geografischen Bereich erstreckt.

Der Lotsenarbeitsplatz wird auch als "Controller Working Position" (CWP) bezeichnet. Hierbei kann es sich um einen physischen Lotsenarbeitsplatz oder einen virtuellen Lotsenarbeitsplatz handeln.

Der Lotsenarbeitsplatz ist in dem lokalen Netzwerk eingebunden, in dem auch die Überwachungseinheit eingebunden ist. Zudem ist der Lotsenarbeitsplatz mit dem Funkgerät verbunden, das in demselben lokalen Netzwerk oder aber in einem externen Netzwerk eingebunden sein kann.

Grundsätzlich kann es sich bei dem Funkgerät um ein sogenanntes VolP-Funkgerät handeln, mit dem die Sprachkommunikation über das IP-Flugverkehrskontrollnetzwerk, also dem Datennetzwerk, erfolgen kann.

Die Überwachungseinheit kann eingerichtet sein, das Flugverkehrskontrollnetzwerk, insbesondere die ausgetauschten Daten innerhalb des Flugverkehrskontrollnetzwerks, mittels "Deep Packet Inspection"-Verfahren (DPI-Verfahren) zu überwachen und/oder zu filtern.

Die Überwachungseinheit kann also eingerichtet sein, tiefe Einblicke in die Netzwerknutzung des Flugverkehrskontrollnetzwerks bzw. das Nutzerverhalten innerhalb des Flugverkehrskontrollnetzwerks zu geben. Auch können Trends vorhergesehen werden, sofern eine zeitliche Auswertung erfolgt.

Es ist mit der Überwachungseinheit möglich, das Flugverkehrskontrollnetzwerk in Echtzeit zu überwachen.

Grundsätzlich kann die Überwachungseinheit eingerichtet sein, gleichzeitig den Datenteil und den Kopfteil ("Header") eines Datenpaketes zu untersuchen. Hierdurch lässt sich mit noch größerer Sicherheit, unerwünschter Datenverkehr innerhalb des Flugverkehrskontrollnetzwerks feststellen. Es lässt sich also auch der Inhalt der ausgetauschten Daten prüfen.

Die Überwachungseinheit kann, wie bereits erläutert, DPI-Verfahren anwenden, um neben den Protokollen auch den Inhalt der ausgetauschten Daten zu überwachen. Es können die ausgetauschten Daten bzw. der Datenverkehr (IP-Verkehr oder auch "IP-Traffic") entsprechend klassifiziert werden, beispielsweise nach Anwendung, Protokoll, Anwender, Ort und/oder Gerätetyp.

Das Sensormodul, welches die ausgetauschten Daten bzw. die gespiegelten Daten entsprechend analysiert, kann die Daten in Metadaten umsetzen, die zur weiteren Verarbeitung zur Verfügung gestellt werden. Hierdurch ist sichergestellt, dass der Inhalt der ausgetauschten Daten nicht weiter zur Verfügung gestellt wird, sondern diesen Daten entsprechend zugeordnete Metadaten.

Die Auswertung der erhaltenen Daten kann beispielsweise dahingehend erfolgen, dass eine visuelle Ausgabe erfolgt, sodass die entsprechenden Auswertungsergebnisse grafisch angezeigt werden. Auch kann die Überwachungseinheit eingerichtet sein, Berichte (automatisch) zu erstellen. Die Auswertungsergebnisse und/oder die Berichte können auf einem Bildschirm angezeigt werden, der dem Flugverkehrskontrollsystem zugeordnet ist.

Es ist sichergestellt, dass das Auswertungsmodul lediglich die Metadaten vom Sensormodul erhält, jedoch nicht den Inhalt der ausgetauschten Daten selbst.

Es liegt also eine Arbeitsteilung zwischen dem Sensormodul und dem Auswertungsmodul vor, da das Sensormodul die innerhalb des Flugverkehrskontrollnetzwerks ausgetauschten Daten analysiert und entsprechende Metadaten dem Auswertungsmodul zur Verfügung stellt. Das Auswertungsmodul kann die Metadaten einfacher und mit höherer Geschwindigkeit in entsprechende Auswertungsergebnisse und/oder Berichte umsetzen, sodass diese in Echtzeit vorliegen. Gleichzeitig erhöht sich die Sicherheit des Netzwerküberwachungssystems dadurch.

Ein Aspekt sieht vor, dass die Überwachungseinheit eingerichtet ist, ausgetauschte Daten innerhalb des Flugverkehrskontrollnetzwerks bis auf die Applikationsebene zu überwachen. Mit anderen Worten werden die ausgetauschten Daten innerhalb des Flugverkehrskontrollnetzwerks bis auf die Applikationsebene überwacht. Die Applikationsebene wird auch als Benutzerebene oder als Ebene 7 ("layer 7) bezeichnet. Insofern handelt es sich bei der Applikationsebene um die höchste Schicht bzw. Ebene, die am nächsten am Endnutzer ist, beispielsweise dem Fluglotsen. Insbesondere lässt sich so mittels der Überwachungseinheit ermitteln, ob unerwünschte Anwendungen laufen und/oder eventuell Kommunikationsbeziehungen nach außen bzw. von außen existieren, die unerwünscht sind.

Insbesondere werden die ausgetauschten Daten des Flugverkehrskontrollnetzwerks zunächst gespiegelt. Die gespiegelten Daten werden dann extrahiert und an die Überwachungseinheit übermittelt, die die entsprechend extrahierten Daten überwacht. Aufgrund der Spiegelung der ausgetauschten Daten ist dennoch sichergestellt, dass die Daten, die von der Überwachungseinheit überwacht werden, den ausgetauschten Daten entsprechen, wobei gleichzeitig der Datenverkehr nicht gestört bzw. verzögert ist.

Insbesondere ist die Überwachungseinheit eingerichtet, lediglich bis zu drei Datenpakete zu überwachen, um die ausgetauschten Daten zu klassifizieren, insbesondere den Inhalt der ausgetauschten Daten bzw. die entsprechenden Anwendungen.

Aufgrund der Analyse der ausgetauschten Daten ist es zudem möglich, dass die Quelle der ausgetauschten Daten bzw. das Ziel der ausgetauschten Daten, also die Senke, von der Überwachungseinheit identifiziert werden kann. Hierdurch lassen sich unerwünschte Kommunikationsbeziehungen in dem Flugverkehrskontrollnetzwerk erkennen, insbesondere bis auf die Applikationsebene.

Die Überwachungseinheit ist demnach eingerichtet, die Art des Inhalts der ausgetauschten Daten zu ermitteln, beispielsweise ob Videodaten, Audiodaten, Sprachdaten und/oder anderen Daten ausgetauscht werden.

Zudem kann die Überwachungseinheit ermitteln, welche Anwendung den entsprechenden Datenverkehr verursacht. Hierbei kann die Überwachungseinheit feststellen, ob die Anwendung, die den Datenverkehr verursacht, eine gewünschte Anwendung ist oder eine ungewünschte Anwendung ist.

Die Überwachungseinheit kann ausgebildet sein, die ausgetauschten bzw. gespiegelten Daten, insbesondere die entsprechenden Datenpakete, zunächst zu ordnen. Anschließend können die Daten, insbesondere die entsprechenden Datenpakete, klassifiziert werden. Danach können die Daten, insbesondere die entsprechenden Datenpakete, dekodiert werden.

Die Überwachungseinheit, insbesondere das Sensormodul, kann demnach Metadaten zur Verfügung stellen, die auf unterschiedlichen Daten basieren. Beispielsweise können Signalisierungsinformationen ("signaling") und Sitzungsleistungsdaten ("session performance data") miteinander korreliert und/oder als gemeinsamer Metadatensatz ausgegeben werden.

Das Sensormodul kann eingerichtet sein, Leistungskennzahlen ("Key Performance Indicators" - KPI) des Flugverkehrskontrollnetzwerks aufgrund der ausgetauschten Daten zu extrahieren. Zudem kann das Sensormodul Klassifizierungsdaten ermitteln, beispielsweise verwendete Protokolle und/oder Anwendungen. Ebenso kann das Sensormodul statische Daten hinsichtlich des Datenverkehrs erfassen, beispielsweise die Anzahl der ausgetauschten Datenpakete und/oder die Menge an Bytes, die ausgetauscht worden sind.

Auch kann die Überwachungseinheit eine Kommunikationsschnittstelle aufweisen, über die die Auswertungsergebnisse und/oder die Berichte kommuniziert werden, beispielsweise an einen Sicherheitsbeauftragten, der das Flugverkehrskontrollnetzwerk überwacht.

Das Auswertungsmodul kann eingerichtet sein, ein Alarmsignal auszugeben, insbesondere wenn während der Auswertung ein unvorhergesehener Datensatz festgestellt wird, also eine ungewünschte Kommunikation bzw. Datenverkehr aufgefunden wurde, der unerwünscht ist bzw. keiner gewünschten Kommunikationsbeziehung bzw. Anwendung zugeordnet werden kann. Es wird demnach mittels des Alarmsignals vor einem potenziellen Eingriff in das Flugverkehrskontrollnetzwerks gewarnt, sodass dies entsprechend überprüft werden kann.

Der unvorhergesehene Datensatz kann einem unvorhergesehenen Metadatensatz entsprechen, der von dem Sensormodul an das Auswertungsmodul übergeben worden ist.

Ferner kann die Überwachungseinheit eingerichtet sein, Informationen aus einem Kopf, Informationen aus einem Erweiterungskopf und/oder Signalisierungsinformationen zu extrahieren. Bei den Informationen aus dem Kopf handelt es sich um sogenannte "Headerinformationen" der ausgetauschten Daten.

Insbesondere kann es sich um Daten bzw. Informationen handeln, die mit dem Real-Time Transport Protocol (RTP) ausgetauscht werden, das zur kontinuierlichen Übertragung von audiovisuellen Daten über IP-Netzwerke verwendet wird.

Grundsätzlich können Daten bzw. Informationen aus einem Kopf ("Header") extrahiert werden, insbesondere einem Erweiterungskopf ("Header Extension"). Beispielsweise handelt es sich um einen RTP-Kopf ("RTP Header") bzw. einen RTP-Erweiterungskopf ("RTP Header Extension"), woraus die Daten bzw. Informationen extrahiert werden.

Ein weiterer Aspekt sieht vor, dass das Netzwerküberwachungssystem eingerichtet ist, die Verbindung bis zu einem Flugzeug zu überwachen, wenn das Flugzeug am Boden ist. Sofern das Flugzeug Bodenkontakt hat, beispielsweise vor dem Start oder nach der Landung, kann die (Sprach-)Kommunikation mit dem Flugzeug über das IP-Flugverkehrskontrollnetzwerk erfolgen, also mittels VolP. In diesem Zustand ist das Flugverkehrskontrollsystem, insbesondere das Netzwerküberwachungssystem, eingerichtet, die Signale bis zum Flugzeug selbst zu überwachen, um eine ungewünschte Kommunikation zu erfassen.

Gemäß einem weiteren Aspekt ist das Netzwerküberwachungssystem eingerichtet, Signale von mehreren Überwachungseinheiten miteinander zu vergleichen und Abweichungen festzustellen. Die Signale können von unterschiedlichen Überwachungseinheiten empfangen werden, die beispielsweise dem Weitverkehrsnetzwerk zugeordnet sind, um sich ein globales Bild zu machen. Die weiteren Überwachungseinheiten können demnach einem eigenen Netzwerküberwachungssystem zugeordnet sein, das entsprechende Vergleichsdaten zur Verfügung stellt, sodass sämtliche Netzwerküberwachungssysteme auf die entsprechenden Daten zugreifen können. Sofern ein Netzwerküberwachungssystem bei der Auswertung Abweichungen feststellen sollte, wird ein entsprechender Alarm ausgegeben, um den Nutzer zu warnen. Dieser kann dann das Flugverkehrskontrollnetzwerk überprüfen.

Insbesondere umfasst das lokale Netzwerk wenigstens einen Server. Über den Server können Vergleichsdaten zur Verfügung gestellt werden, die bei der Netzwerküberwachung von der Überwachungseinheit berücksichtigt werden. Ebenso kann das Netzwerküberwachungssystem Daten über den Server bereitstellen, die für andere Netzwerküberwachungssysteme, insbesondere externe Netzwerküberwachungssysteme desselben Typs, bzw. andere Überwachungseinheiten desselben Netzwerküberwachungssystems von Bedeutung sind, beispielsweise Auswertungsdaten oder Vergleichsdaten.

Auch kann über den Server ein Datenexport erfolgen, beispielsweise für Datensammlungssysteme und/oder Analysesysteme von Dritten.

Grundsätzlich ist die Überwachungseinheit eingerichtet, den Datenverkehr in Echtzeit zu überwachen, also zu prüfen und zu analysieren. Die Überwachungseinheit, insbesondere das Sensormodul, erkennt dabei eine Vielzahl von unterschiedlichen Anwendungen, die am Datenverkehr beteiligt sind, und extrahiert Metadaten und Anwendungsattribute aus dem Datenverkehr.

Die Überwachungseinheit ist eingerichtet, die Datenpakete, insbesondere die IP-Pakete, mit verschiedenen Technologien wie "Deep Packet Inspection"-Verfahren und Verhaltensanalysen zu analysieren, beispielsweise heuristische und statistische Analysen. Hierüber kann die Überwachungseinheit das Protokoll, die Anwendung und andere anwendungsbezogene Attribute des Datenverkehrs bestimmen.

Um die beteiligten Anwendung(en), beispielsweise verschlüsselt kommunizierende Anwendungen, zu ermitteln, kann die Überwachungseinheit, insbesondere das Sensormodul, eingerichtet sein, Netzwerkflussverfolgungen, Bytemusterabgleiche und Verhaltensanalysen durchzuführen.

Generell lässt sich das Sensormodul und/oder das Auswertungsmodul als Software oder Hardware ausbilden. Insofern kann die Überwachungseinheit durch Software ausgebildet sein, die auf einer Recheneinheit läuft.

Ferner liegen Daten zur schnellen Problemerkennung und Verbesserung des Qualitätsservices ("Quality of Service" -QoS) für die Endnutzer schneller vor, da eine Echtzeitüberwachung und -auswertung gegeben ist.

Zudem können bei der Analyse des Datenverkehrs, Einblicke in das Datenvolumen bestimmter Anwendungen, ihr zeitliches Nutzungsverhalten und ihre Beliebtheit erhalten werden.

Diese Auswertungsergebnisse können entsprechend dargestellt werden, beispielsweise über einen definierten Zeitraum. Beispielsweise lassen sich Wochen- und Monatsmuster darstellen, oder eine Ansicht mit einer höheren Granularität, beispielsweise einer 10-minütigen Granularität.

Auch kann ein Überblick über den Datenverkehr eines Nutzers erhalten werden, der es ihnen ermöglicht, sich mit Anwendungs-, Protokoll-, Transport- und Netzwerkschichtdetails zu befassen.

Diese Auswertungsergebnisse dienen lediglich zur Information bzw. statistischen Auswertung. Die Erkenntnisse können genutzt werden, um die Leistungsfähigkeit des Flugverkehrskontrollnetzwerks zu verbessern.

Sobald während der Auswertung ein unvorhergesehener Datensatz festgestellt wird, wird ein Alarmsignal ausgegeben, um entsprechende manuelle Überprüfungen durchzuführen bzw. Gegenmaßnahmen einzuleiten.

Weitere Vorteile und Eigenschaften der Erfindung ergeben sich aus der nachfolgenden Beschreibung und den Zeichnungen, auf die Bezug genommen wird. In der einzigen Figur ist eine schematische Darstellung eines erfindungsgemäßen Flugverkehrskontrollsystems gezeigt.

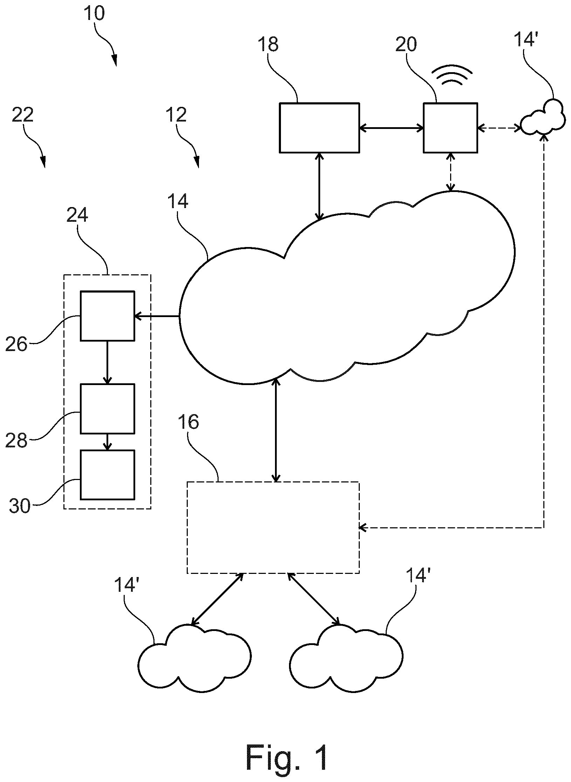

In Figur 1 ist ein Flugverkehrskontrollsystem 10 zur Flugsicherung gezeigt, das ein Flugverkehrskontrollnetzwerk 12 umfasst, welches als ein Internet-Protokoll-Flugverkehrskontrollnetzwerk (IP-Flugverkehrskontrollnetzwerk) ausgebildet ist.

Das Flugverkehrskontrollnetzwerk 12 umfasst ein lokales Netzwerk 14, welches mit einem Weitverkehrsnetzwerk 16 (WAN) verbunden ist. Das Weitverkehrsnetzwerk 16 kann mit weiteren lokalen Netzwerken 14' verbunden sein, wie nachfolgend noch erläutert wird.

Das Flugverkehrskontrollsystem 10 umfasst zudem wenigstens einen Lotsenarbeitsplatz 18, der mit dem lokalen Netzwerk 14 verbunden ist. Mit anderen Worten ist der Lotsenarbeitsplatz 18 in dem lokalen Netzwerk 14 eingebunden.

Der Lotsenarbeitsplatz 18 ist zudem mit wenigstens einem Funkgerät 20 signalübertragend verbunden, das in dem lokalen Netzwerk 14 eingebunden ist oder mit einem externen (lokalen) Netzwerk 14`. Das externe (lokale) Netzwerk 14' kann mit dem Weitverkehrsnetzwerk 16 verbunden sein.

Darüber hinaus umfasst das Flugverkehrskontrollsystem 10 ein Netzwerküberwachungssystem 22, welches eine Überwachungseinheit 24 aufweist, die mit dem lokalen Netzwerk 14 verbunden bzw. in diesem eingebunden ist, wie aus Figur 1 deutlich wird.

Die Überwachungseinheit 24 umfasst ein Sensormodul 26 sowie ein Auswertungsmodul 28, die miteinander signalübertragend verbunden sind.

Zudem hat die Überwachungseinheit 24 in der gezeigten Ausführungsform einen Bildschirm 30, der Daten vom Auswertungsmodul 28 erhält.

Alternativ kann der Bildschirm 30 separat zur Überwachungseinheit 24 ausgebildet sein.

In jedem Fall ist der Bildschirm 30 Teil des Netzwerküberwachungssystems 22 und dient zur Anzeige bzw. Darstellung der Auswertungsergebnisse des Auswertungsmoduls 28 und somit des Netzwerküberwachungssystems 22, wie nachfolgend noch erläutert wird.

Grundsätzlich ist die Überwachungseinheit 24 eingerichtet, innerhalb des Flugverkehrskontrollnetzwerks 12, insbesondere des lokalen Netzwerks 14, ausgetauschte Daten zu überwachen, also den Datenverkehr.

Dabei kann die Überwachungseinheit 24, insbesondere das Sensormodul 26, "Deep Packet Inspection"-Verfahren anwenden, sodass neben den Protokollen auch den Inhalt der ausgetauschten Daten überwacht werden kann, beispielsweise bis auf die jeweilige Applikationsebene.

Hierdurch ist es möglich, dass unerwünschte Anwendungen und Kommunikationsbeziehungen von bzw. nach außen festgestellt werden können.

Das Sensormodul 26 analysiert hierzu die innerhalb des Flugverkehrskontrollnetzwerks 12 ausgetauschten Daten nach Art des Inhalts, verwendetem Protokoll, Quelle, Senke und/oder Metadaten. Hierdurch ist es unter anderem möglich, dass festgestellt werden kann, wohin unerwünschte Daten fließen (Senke) bzw. von wo (Quelle) unerwünschte Daten in das Flugverkehrskontrollnetzwerk 12 eingespeist werden.

Die entsprechende Quelle bzw. Senke lässt sich also aufgrund des Sensormoduls 26 identifizieren.

Zudem ist das Sensormodul 26 eingerichtet, die ausgetauschten Daten in Metadaten umzusetzen, die dem Auswertungsmodul 28 zur Verfügung gestellt werden, welches die entsprechend erhaltenen Daten auswertet. Dazu können unterschiedliche Daten bzw. Informationen, beispielsweise Signalisierungsinformationen ("signaling") und Sitzungsleistungsdaten ("session performance data"), miteinander korreliert werden, die dann als gemeinsamer Metadatensatz ausgegeben werden.

Die Daten bzw. Informationen können mit dem Real-Time Transport Protocol (RTP) ausgetauscht werden.

Grundsätzlich können die Daten bzw. die Informationen aus einem Kopf ("Header") extrahiert werden, insbesondere einem Erweiterungskopf ("Header Extension"). Beispielsweise handelt es sich um einen RTP-Kopf ("RTP Header") bzw. einen RTP-Erweiterungskopf ("RTP Header Extension"), woraus die Daten bzw. Informationen extrahiert werden.

Das Auswertungsmodul 28 wertet die erhaltenden Metadaten aus und bereitet diese graphisch auf, sodass diese am Bildschirm 30 angezeigt bzw. visualisiert werden können.

Bei der Auswertung der Daten, insbesondere der vom Sensormodul 26 bereitgestellten Metadaten, kann ein Alarmsignal (vom Auswertungsmodul 28) ausgegeben werden, sofern ein unerwarteter Datensatz vorliegt.

Grundsätzlich ist das Netzwerküberwachungssystem 22 eingerichtet, Signale von mehreren Überwachungseinheiten 24 zu verarbeiten, die dem Flugverkehrskontrollnetzwerk 12 zugeordnet bzw. in mehreren lokalen Netzwerken 14, 14' eingebunden sind. Dabei können die verschiedenen Daten miteinander verglichen werden, um Abweichungen voneinander festzustellen. Abweichungen können auf unerwünschte Kommunikation oder Anwendungen schließen lassen, sodass eine Überprüfung des jeweiligen lokalen Netzwerks 14, 14' oder Teilnetzwerks vorgenommen werden kann. Mit anderen Worten können die Daten der weiteren Überwachungseinheiten 24 von Überwachungseinheiten 24 kommen, die in anderen (lokalen) Netzwerken 14' eingebunden sind, die wiederum mit dem Weitverkehrsnetzwerk 16 verbunden sind.

Grundsätzlich ist es somit möglich, dass sich das Netzwerküberwachungssystem 22 ein globales Bild macht, da es Informationen aus unterschiedlichen lokalen Netzwerken 14, 14' erhält, die mit dem Weitverkehrsnetzwerk 16 verbunden sind, wodurch entsprechende Abweichungen in einem Netzwerk bzw. Teilnetzwerk festgestellt werden können.

Darüber hinaus ist das Netzwerküberwachungssystem 22 eingerichtet, eine Verbindung bis zu einem Flugzeug zu überwachen, das vom Flugverkehrskontrollsystem 10 geleitet wird, sofern das Flugzeug am Boden ist.

Beispielsweise findet mit dem am Boden befindlichen Flugzeug eine Sprachkommunikation über VoIP statt, also über das als Internet-Protokoll-Netzwerk ausgebildetem Flugverkehrskontrollnetzwerk 12, wobei die entsprechenden Sprachkommunikation mittels des Datennetzes erfolgt.

Das Netzwerküberwachungssystem 22 ist grundsätzlich ausgebildet, nicht nur die IP-Protokolle zu analysieren und eventuell zu blocken, sondern die ausgetauschten Daten bis auf die Applikationsebene zu überwachen, da zusätzlich unter anderem der Inhalt der ausgetauschten Daten geprüft wird.

Über das Auswertungsmodul 28 ist es zudem möglich, entsprechende Informationen bzw. Auswertungsergebnisse grafisch aufzubereiten und einem Nutzer des Netzwerküberwachungssystems 22 über den Bildschirm 30 anzuzeigen, sodass dieser in Echtzeit informiert werden kann.

Die Auswertung über das Auswertungsmodul 28 kann Statistiken hinsichtlich der Protokolle bzw. der Anwendungen enthalten. Darüber hinaus können detaillierte mobile Netzwerknutzungsdaten, Kommunikationsqualitätsdaten, beispielsweise (KPls), sowie Datenratenanalysen erstellt und dem Nutzer zur in visueller Form zur Verfügung gestellt werden.

Auch kann das Auswertungsmodul 28 entsprechende Auswertungsergebnisse bzw. Berichte über eine Kommunikationsschnittstelle versenden, sodass sie beispielsweise einem Dienstleister zur Verfügung gestellt werden, der für die Netzwerksicherheit verantwortlich ist. Die entsprechenden Auswertungsergebnisse bzw. Berichte können über die Kommunikationsschnittstelle auch anderweitig zur Verfügung gestellt werden, beispielsweise über ein Web-Interface, über das vordefinierte Personen (vertrauenswürdige Personen) Zugriff haben, insbesondere nach vorheriger Authentifizierung.

Zu Überprüfung des Datenverkehrs können die ausgetauschten Daten innerhalb des Flugverkehrskontrollnetzwerks 12 zunächst gespiegelt werden, bevor diese von der Überwachungseinheit 24 analysiert werden, insbesondere vom Sensormodul 26. Dies gewährleistet einen reibungslosen Datenverkehr im Flugverkehrskontrollnetzwerk 12, bei dem keine Verzögerung aufgrund der Analyse bzw. Überprüfung des Inhalts der Daten aufkommt.

Es ist möglich, kontinuierlich zu überprüfen, ob unerwünschte Anwendungen innerhalb des Flugverkehrskontrollnetzwerks 14 laufen und eventuell unerwünschte Kommunikationsbeziehungen vorliegen.

Die Sicherheit des Flugverkehrskontrollnetzwerks 12 ist dementsprechend erhöht. Zudem lässt sich der Datenverkehr entsprechend protokollieren.

## Patentansprüche

1. Flugverkehrskontrollsystem zur Flugsicherung, mit wenigstens einem Lotsenarbeitsplatz (18), wenigstens einem Funkgerät (20), einem Flugverkehrskontrollnetzwerk (12), das als ein Internet-Protokoll-Flugverkehrskontrollnetzwerk ausgebildet ist, und einem Netzwerküberwachungssystem (22), das dem Flugverkehrskontrollnetzwerk (12) zugeordnet ist, wobei das Flugverkehrskontrollnetzwerk (12) ein lokales Netzwerk (14) umfasst, das mit einem Weitverkehrsnetzwerk (16) verbunden ist, wobei der Lotsenarbeitsplatz (18) in dem lokalen Netzwerk (16) eingebunden und mit dem Funkgerät (20) verbunden ist, das in dem lokalen Netzwerk (16) und/oder in einem externen Netzwerk eingebunden ist, und wobei das Netzwerküberwachungssystem (22) eine Überwachungseinheit (24) aufweist, die in dem lokalen Netzwerk (14) eingebunden ist, wobei die Überwachungseinheit (24) wenigstens ein Sensormodul (26) aufweist, das eingerichtet ist, ausgetauschte Daten innerhalb des Flugverkehrskontrollnetzwerks (14) nach Art des Inhalts, verwendetem Protokoll, Quelle, Senke und/oder Metadaten der ausgetauschten Daten zu analysieren, wobei das Sensormodul (26) eingerichtet ist, die ausgetauschten Daten in Metadaten umzusetzen, wobei die Überwachungseinheit (24) wenigstens ein Auswertungsmodul (28) aufweist, das mit dem Sensormodul (26) signalübertragend verbunden ist, und wobei das Auswertungsmodul (28) eingerichtet ist, die vom Sensormodul (26) erzeugten Metadaten zu erhalten und auszuwerten.

2. Flugverkehrskontrollsystem nach Anspruch 1, **dadurch gekennzeichnet, dass** die Überwachungseinheit (24) eingerichtet ist, ausgetauschte Daten innerhalb des Flugverkehrskontrollnetzwerks (12) bis auf die Applikationsebene zu überwachen.

3. Flugverkehrskontrollsystem nach Anspruch 1 oder 2, **dadurch gekennzeichnet, dass** das Auswertungsmodul (28) eingerichtet ist, ein Alarmsignal auszugeben.

4. Flugverkehrskontrollsystem nach einem der vorhergehenden Ansprüche, **dadurch gekennzeichnet, dass** die Überwachungseinheit (24) eingerichtet ist, Informationen aus einem Kopf, Informationen aus einem Erweiterungskopf und/oder Signalisierungsinformationen zu extrahieren.

5. Flugverkehrskontrollsystem nach einem der vorhergehenden Ansprüche, **dadurch gekennzeichnet, dass** das Netzwerküberwachungssystem (22) eingerichtet ist, die Verbindung bis zu einem Flugzeug zu überwachen, wenn das Flugzeug am Boden ist.

6. Flugverkehrskontrollsystem nach einem der vorhergehenden Ansprüche, **dadurch gekennzeichnet, dass** das Netzwerküberwachungssystem (22) eingerichtet ist, Signale von mehreren Überwachungseinheiten (24) miteinander zu vergleichen und Abweichungen festzustellen.

7. Verfahren zur Überwachung eines Flugverkehrskontrollnetzwerks (14) eines Flugverkehrskontrollsystems (10) zur Flugsicherung, wobei das Flugverkehrskontrollnetzwerk (14) als ein Internet-Protokoll-Flugverkehrskontrollnetzwerk ausgebildet ist und ein lokales Netzwerk (14) umfasst, das mit einem Weitverkehrsnetzwerk (16) verbunden ist, und wobei wenigstens ein Lotsenarbeitsplatz (18) in dem lokalen Netzwerk (14) eingebunden und mit einem Funkgerät (20) verbunden ist, das in dem lokalen Netzwerk (14) und/oder in einem externen Netzwerk eingebunden ist, wobei das Verfahren die folgenden Schritte umfasst:
- Extrahieren von ausgetauschten Daten innerhalb des Flugverkehrskontrollnetzwerks (12) mittels einer Überwachungseinheit (24), die in dem lokalen Netzwerk (14) eingebunden ist, und
- Überwachen der ausgetauschten Daten mittels der Überwachungseinheit (24),
wobei die ausgetauschten Daten innerhalb des Flugverkehrskontrollnetzwerks (12) nach Art des Inhalts, verwendetem Protokoll, Quelle, Senke und/oder Metadaten der ausgetauschten Daten analysiert werden, und
wobei die ausgetauschten Daten in Metadaten umgesetzt werden, die ausgewertet werden.

8. Verfahren nach Anspruch 7, **dadurch gekennzeichnet, dass** die ausgetauschten Daten innerhalb des Flugverkehrskontrollnetzwerks (12) bis auf die Applikationsebene überwacht werden und/oder dass die ausgetauschten Daten des Flugverkehrskontrollnetzwerks (12) zunächst gespiegelt werden.

9. Verfahren nach Anspruch 7 oder 8, **dadurch gekennzeichnet, dass** ein Alarmsignal ausgegeben wird, wenn während der Auswertung ein unvorhergesehener Datensatz festgestellt wird.

10. Verfahren nach einem der Ansprüche 7 bis 9, **dadurch gekennzeichnet, dass** die Verbindung bis zu einem Flugzeug überwacht wird, wenn das Flugzeug am Boden ist.

11. Verfahren nach einem der Ansprüche 7 bis 10, **dadurch gekennzeichnet, dass** Signale von mehreren Überwachungseinheiten (24) miteinander verglichen und Abweichungen festgestellt werden, insbesondere wobei ein Alarmsignal ausgegeben wird, wenn Abweichungen festgestellt worden sind.

## Claims

1. Air traffic control system for air traffic control, comprising at least one controller working position (18), at least one radio (20), an air traffic control network (12), which is designed as an Internet Protocol air traffic control network, and a network monitoring system (22) which is associated with the air traffic control network (12), wherein the air traffic control network (12) comprises a local area network (14) which is connected to a wide area network (16), wherein the controller working position (18) is integrated in the local area network (16) and connected to the radio (20), which radio is integrated in the local area network (16) and/or in an external network, and wherein the network monitoring system (22) has a monitoring unit (24), which is integrated in the local area network (14), wherein the monitoring unit (24) has at least one sensor module (26) which is set up to analyze exchanged data within the air traffic control network (14) according to the type of content, protocol used, source, sink and/or metadata of the exchanged data, wherein the sensor module (26) is set up to convert the exchanged data into metadata, wherein the monitoring unit (24) has at least one evaluation module (28) which is connected to the sensor module (26) in a signal-transmitting manner, and wherein the evaluation module (28) is set up to receive and evaluate the metadata generated by the sensor module (26).

2. Air traffic control system according to claim 1, **characterized in that** the monitoring unit (24) is set up to monitor exchanged data within the air traffic control network (12) up to the application layer.

3. Air traffic control system according to either claim 1 or claim 2, **characterized in that** the evaluation module (28) is set up to output an alarm signal.

4. Air traffic control system according to any of the preceding claims, **characterized in that** the monitoring unit (24) is set up to extract information from a header, information from a header extension and/or signaling information.

5. Air traffic control system according to any of the preceding claims, **characterized in that** the network monitoring system (22) is set up to monitor connection to an airplane when the airplane is grounded.

6. Air traffic control system according to any of the preceding claims, **characterized in that** the network monitoring system (22) is set up to compare signals from a plurality of monitoring units (24) with one another and to determine deviations.

7. Method for monitoring an air traffic control network (14) of an air traffic control system (10) for air traffic control, wherein the air traffic control network (14) is designed as an Internet Protocol air traffic control network and comprises a local area network (14) which is connected to a wide area network (16), and wherein at least one controller working position (18) is integrated in the local area network (14) and is connected to a radio (20) which is integrated in the local area network (14) and/or in an external network, wherein the method comprises the following steps:
- extracting exchanged data within the air traffic control network (12) by means of a monitoring unit (24) which is integrated in the local area network (14), and
- monitoring the exchanged data by means of the monitoring unit (24),
wherein the exchanged data within the air traffic control network (12) is analyzed according to type of content, protocol used, source, sink, and/or metadata of the exchanged data, and
wherein the exchanged data are converted into metadata that are evaluated.

8. Method according to claim 7, **characterized in that** the exchanged data within the air traffic control network (12) up to the application layer are monitored **and/or in that** the exchanged data of the air traffic control network (12) are initially mirrored.

9. Method according to either claim 7 or claim 8, **characterized in that** an alarm signal is output if an unforeseen data record is determined during the evaluation.

10. Method according to any of claims 7 to 9, **characterized in that** the connection to an airplane is monitored when the airplane is grounded.

11. Method according to any of claims 7 to 10, **characterized in that** signals from a plurality of monitoring units (24) are compared with one another and deviations are detected, in particular with an alarm signal being output when deviations have been detected.

## Revendications

1. Système de contrôle du trafic aérien pour la sécurité aérienne, comportant au moins un poste de travail de contrôleur (18), au moins un appareil radio (20), un réseau de contrôle du trafic aérien (12) qui est réalisé en tant que réseau de contrôle du trafic aérien à protocole Internet, et un système de surveillance de réseau (22) qui est associé au réseau de contrôle du trafic aérien (12), dans lequel le réseau de contrôle du trafic aérien (12) comprend un réseau local (14) qui est connecté à un réseau de trafic étendu (16), dans lequel le poste de travail de contrôleur (18) est intégré dans le réseau local (16) et est connecté à l'appareil radio (20) qui est intégré dans le réseau local (16) et/ou dans un réseau externe, et dans lequel le système de surveillance de réseau (22) présente une unité de surveillance (24) qui est intégrée dans le réseau local (14), dans lequel l'unité de surveillance (24) présente au moins un module capteur (26) qui est configuré pour analyser des données échangées à l'intérieur du réseau de contrôle du trafic aérien (14) selon le type de contenu, le protocole utilisé, la source, le puits et/ou les métadonnées des données échangées, dans lequel le module capteur (26) est configuré pour convertir les données échangées en métadonnées, dans lequel l'unité de surveillance (24) présente au moins un module d'évaluation (28) qui est connecté au module capteur (26) par transmission de signaux, et dans lequel le module d'évaluation (28) est configuré pour recevoir et évaluer les métadonnées générées par le module capteur (26).

2. Système de contrôle du trafic aérien selon la revendication 1, **caractérisé en ce que** l'unité de surveillance (24) est configurée pour surveiller les données échangées à l'intérieur du réseau de contrôle du trafic aérien (12) jusqu'au niveau d'application.

3. Système de contrôle du trafic aérien selon la revendication 1 ou 2, **caractérisé en ce que** le module d'évaluation (28) est configuré pour émettre un signal d'alarme.

4. Système de contrôle du trafic aérien selon l'une des revendications précédentes, **caractérisé en ce que** l'unité de surveillance (24) est configurée pour extraire des informations d'un en-tête, des informations d'un en-tête d'extension et/ou des informations de signalisation.

5. Système de contrôle du trafic aérien selon l'une des revendications précédentes, **caractérisé en ce que** le système de surveillance de réseau (22) est configuré pour surveiller la connexion vers un avion lorsque l'avion est au sol.

6. Système de contrôle du trafic aérien selon l'une des revendications précédentes, **caractérisé en ce que** le système de surveillance de réseau (22) est configuré pour comparer entre eux des signaux provenant de plusieurs unités de surveillance (24) et pour détecter des différences.

7. Procédé pour la surveillance d'un réseau de contrôle du trafic aérien (14) d'un système de contrôle du trafic aérien (10) pour la sécurité aérienne, dans lequel le réseau de contrôle du trafic aérien (14) est réalisé en tant que réseau de contrôle du trafic aérien à protocole Internet et comprend un réseau local (14) qui est connecté à un réseau de trafic étendu (16), et dans lequel au moins un poste de travail de contrôleur (18) est intégré dans le réseau local (14) et est connecté à un appareil radio (20) qui est intégré dans le réseau local (14) et/ou dans un réseau externe, dans lequel le procédé comprend les étapes suivantes :
- extraction de données échangées à l'intérieur du réseau de contrôle du trafic aérien (12) au moyen d'une unité de surveillance (24) qui est intégrée dans le réseau local (14), et
- surveillance des données échangées au moyen de l'unité de surveillance (24),
dans lequel les données échangées à l'intérieur du réseau de contrôle du trafic aérien (12) sont analysées selon le type de contenu, le protocole utilisé, la source, le puits et/ou les métadonnées des données échangées, et
dans lequel les données échangées sont converties en métadonnées qui sont évaluées.

8. Procédé selon la revendication 7, **caractérisé en ce que** les données échangées à l'intérieur du réseau de contrôle du trafic aérien (12) sont surveillées jusqu'au niveau d'application **et/ou en ce que** les données échangées du réseau de contrôle du trafic aérien (12) sont d'abord mises en miroir.

9. Procédé selon la revendication 7 ou 8, **caractérisé en ce qu'**un signal d'alarme est émis lorsqu'un jeu de données imprévu est détecté pendant l'évaluation.

10. Procédé selon l'une des revendications 7 à 9, **caractérisé en ce que** la connexion vers un avion est surveillée lorsque l'avion est au sol.

11. Procédé selon l'une des revendications 7 à 10, **caractérisé en ce que** des signaux de plusieurs unités de surveillance (24) sont comparés entre eux et des différences sont détectées, en particulier dans lequel un signal d'alarme est émis lorsque des différences ont été détectées.
